# EUROPEAN PATENT SPECIFICATION

(11) **EP 1 663 050 B1**
(45) Date of publication and mention of the grant of the patent: **30.07.2008**
(21) Application number: 04769315.5
(22) Date of filing: 08.09.2004
(51) Int. Cl.: A61C 8/00

(54) **AESTHETIC ENDOSTEAL IMPLANT**
ÄSTHETISCHES ENDOSTEALES IMPLANTAT
IMPLANT ENDOSTEAL ESTHETIQUE

(30) Priority: 08.09.2003 IT MI20031720
(43) Date of publication of application: 07.06.2006
(73) Proprietor: SHAKLETON S.R.L., 25122 Brescia (IT)
(72) Inventor: TINTI, Carlo, 25020 Flero (IT)
(74) Representative: Adorno, Silvano
(86) International application number: PCT/IB2004/002916
(87) International publication number: WO 2005/023137

(56) References cited:
- DE-U- 9 202 396
- US-A- 5 302 126
- US-B1- 6 431 867

## Description

The present invention relates to an endosteal implant and to the relevant prosthetic components.

It is known that many people turn to implantology for restoring the functionality of lost teeth. Osteointegrated implantology aims to provide a rigid bone anchorage for the prostheses in order to improve the mastication function.

Endosteal implants are substantially formed of a screw to be inserted in the bone and wherein a pillar is screwed. On the latter there is applied a crown (also known iri the field as golden cylinder) which acts as a base for the tooth. Known implants may be divided in two groups according to whether the crown is screwed on the pillar or cemented thereto.

Both types of implants, though being functional from the osteointegration point of view, have the problem of being unaesthetic. As a matter of fact, when the teeth are extracted, the bone festoon-shaping which physiologically surrounds the dental elements is irremediably lost, therefore the bone where the implant is anchored assumes a substantially straight contour and the implants are arranged on a single axis. In this way the typical festooned contour of natural teeth is lost and the prosthetic result assumes an aesthetically unpleasant aspect.

This problem is more serious in the case of implants with angled pillars which are used to compensate improper arrangements of the same implants. In these cases, in fact, there is created an angle between the axis of the implant and the tooth which moves the edge of the tooth away from the gingival edge, making visible a part of the pillar and increasing thus the aesthetic problem.

In order to solve these problems, in the last years several solutions have been proposed which arrange the baseplate, the plate from which the tooth begins, underneath the gingival edge. However these solutions do not overcome the aesthetic problem caused by the loss of the festooned contour of the teeth.

The two USA patents No. 6.174.167 and No. 6.283.754 propose new types of endosteal implants which, although keeping the arrangement of the crown unchanged with respect to the prior art, imitate the festooned contour of the gumcement junction of the natural tooth. However, in order to achieve this effect, they reduce significantly the thickness of the residual bone in the interproximal area, that is the area comprised between two teeth, making said bone not very vascularized and favoring thus the reabsorption thereof. Therefore, even if immediately after the completion of the implant the prosthetic result is aesthetically acceptable, it could become worse with the passing of time and have all the above mentioned aesthetical drawbacks.

The preamble of claim 1 is based on USA patent No. 6.431.867.

Known implants of the screwed crown type, moreover, have the drawback of favoring the settlement of bacteria between the crown and the pillar with significant risks of inflammation of the tissues, in particular if the edge of the crown is placed under the gingival edge. On the other hand, known implants of the cemented crown type have problems when they have to be removed, for example for maintenance.

The object of the present invention is therefore to provide an endosteal implant and the relevant prosthetic components free from said drawbacks.

Said object is achieved through an endosteal implant and relevant prosthetic components whose main features are specified in the first claim. Further features are specified in the subsequent claims.

The endosteal implant, according to the present invention, besides not having osteointegration surgical problems, is aesthetically pleasant since it preserves the festooned contour of the vestibular bone, that is the more external one with respect to the oral cavity, and thus it is imperceptible to the eye. Moreover this feature is more enduring with respect to the implants proposed up to now since the implant according to the present invention preserves as much bone as possible with consequent advantages for the health of the latter.

Another advantage of the endosteal implant according to the present invention is to provide the application of a thin layer of cement only on the edge of the baseplate in order to prevent the bacteria settlement and, at the same time, to favor a simple removal for maintenance.

Further advantages and features of the endosteal implant according to the present invention will be clear to those skilled in the art from the following detailed and non limiting description of some embodiments thereof with reference to the attached drawings wherein:
figure 1 shows a see-through perspective view of the screw of the endosteal implant according to the first and to the second embodiment of the present invention;
figure 2 shows a see-through perspective view of some elements of the implant according to the first embodiment of the invention;
figure 3 shows a see-through perspective view of the implant according to the first embodiment of the present invention;
figure 4 shows a see-through perspective view of some elements of the implant according to the second embodiment of the present invention;
figure 5 shows a see-through perspective view of the implant according to the second embodiment of the present invention; and
figure 6 shows a see-through front view of the endosteal implant according to an alternative embodiment of the present invention.

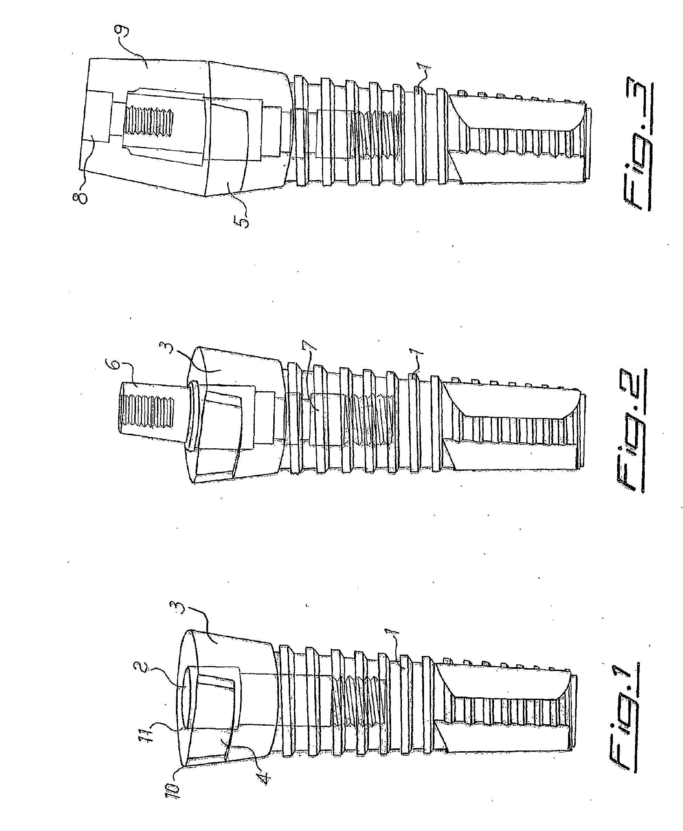

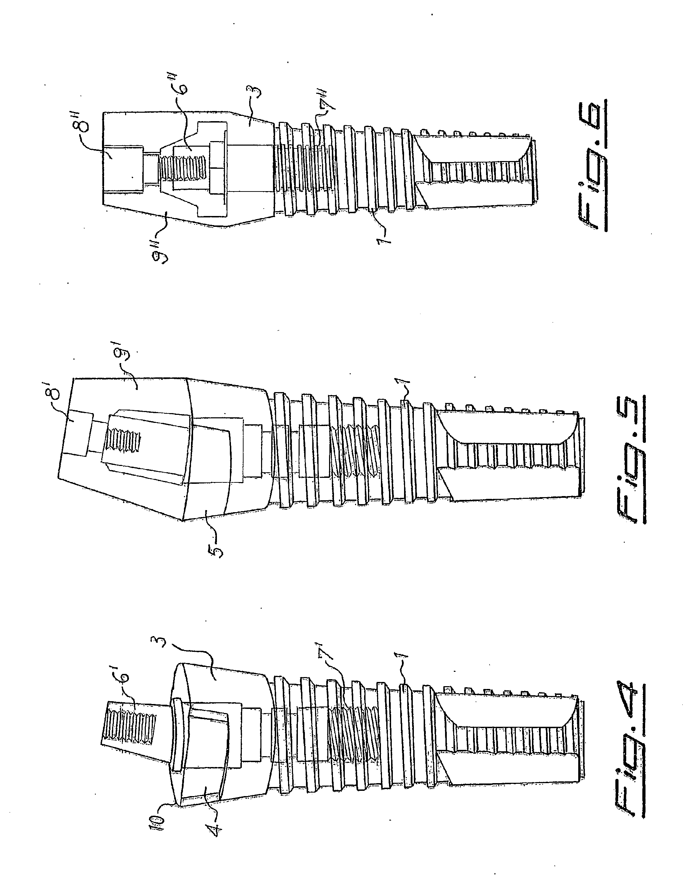

Referring to figure 1, there is seen that the implant according to the present invention comprises in a known way a screw 1 to be inserted in the bone and to act as anchorage for the prosthetic apparatus. This screw 1 has an internal cavity 2 fitted for receiving the shank 7, 7' of a prosthetic pillar 6, 6'. This cavity 2 is preferably threaded in the bottom portion and has a preferably hexagonal section in a more external portion. It has the double function of allowing the insertion of a wrench for the positioning of the implant and of receiving the shank 7, 7' of the prosthetic pillar 6, 6', respectively shown in figures 2 and 4. The screw 1 is further provided, in the top portion, that is on the end which protrudes externally, with a frusto-conically shaped baseplate 3 which comprises an internal edge 11 defining cavity 2 and an external edge 10. On the external surface of the baseplate 3 there is obtained a groove 4 of suitable shape and size.

Referring now also to figures 2, 3, 4 and 5, there is seen that according to the present invention said prosthetic pillar 6, 6' comprises a shank 7, 7' suitable for being inserted in cavity 2 of screw 1 and a top projecting portion suitable for the anchorage of the crown. The prosthetic pillar 6, 6' in the preferred embodiments, once it has been inserted in cavity 2, is fixed to screw 1 through cement.

The projecting portion of pillar 6, 6' is substantially frusto-conically shaped with the major base laid on the baseplate 3 and ends on the internal edge 11 of the same baseplate 3. Said projecting portion of the prosthetic pillar 6, 6' is provided with a threaded cavity wherein is screwed a further fastening means 8, 8' fitted for fixing a crown 9, 9' to the remainder of the implant. The crown 9, 9' is substantially frusto-conically shaped and is provided with an extension 5, contiguous to the lateral surface thereof and anguled with respect thereto, suitable for getting, with its complementary shape, into groove 4 of the baseplate 3 in such a way that the edges of the crown 9, 9' coincide with the external edges of the baseplate 3. The prosthetic pillar 6, 6', once it has been mounted, forms with screw 1 an angle of width preferably comprised between 5° and 30°.

In the first embodiment, shown in figures 2 and 3, the projecting portion of said prosthetic pillar 6 is frustoconical with an axis inclined of 5° with respect to screw 1. The fastening means 8 has the same inclination of said axis, while the shank 7 of the prosthetic pillar 6 is coaxial with screw 1. Obviously, the crown 9 has such a shape to fit the remaining prosthetic components 6, 8 and thus it is inclined of 5° too.

In the second embodiment, shown in figures 4 and 5, the inclination of the projecting portion of the prosthetic pillar 6', of the fastening means 8' and of the crown 9' is such to form an angle of about 22° with screw 1, while the further screw 7 is coaxial therewith.

Figure 6 shows an implant with the prosthetic components 6", 8", 9" coaxial with screw 1. In this case the shank 7" of the prosthetic pillar 6" is threaded as well as the inside of cavity 2 fitted for receiving it. The prosthetic pillar 6" is thus fixed to screw 1 by simply screwing. As shown in figure 6, prosthetic pillar 6" may be carried out in two connectable pieces, as for example a screw and a projecting portion connectable thereto. This implant, from an aesthetical point of view is similar to those of traditional type, but with respect thereto, it has the above mentioned advantages related to the maintenance and to the bacteria settlements.

The application of the implant according to the present invention takes place in the way described in the following.

Screw 1 is fixed in the bone in such a way to turn frontally the groove 4 of the baseplate 3. In this way, on the frontal aspect there is created the festooned bone structure typical of natural teeth, preserving most of the bone on the mesial, palatine and distal aspect of the implant, thanks to the peculiar shape and structure of the implant according to the present invention.

Once the screw 1 has been placed, shank 7, 7' of the prosthetic pillar 6, 6' has to be inserted in cavity 2. This prosthetic pillar 6, 6' is fastened to screw 1 by means of a small quantity of cement.

After the tooth has been shaped on crown 9, 9', there is applied a thin layer of cement or other binding materials only on the edge of the baseplate 3 and hence the crown 9, 9' is positioned in such a way that the extension 5 gets into groove 4 and the edges of the crown 9, 9' correspond to the external edge 10 of the baseplate 3. The crown 9, 9' is then further fixed to the remaining prosthetic components through the fastening means 8, 8'. The exceeding cement is discharged partly outside, and thus removed, and partly inside the crown 9, 9'. However, thanks to the interspace between the prosthetic pillar 6, 6', which lays on the internal edge 11 of the baseplate 3 and the crown 9, 9' which lays on the external edge 10 of the baseplate 3, said exceeding cement does not spread on the prosthetic pillar 6, 6' but is restrained in this interspace. Therefore, the retention of the cement is minimum, that is sufficient to avoid bacteria settlements but not so strong to cause problems during the maintenance. As a matter of fact, it is sufficient to apply a light force to remove crown 9, 9' after the fastening means 8, 8' has been unscrewed.

Since the edge of the tooth begins where crown 9, 9' begins, that is on the external edge 10 of the baseplate 3, the bone and the gingival festooned contour is preserved for an indefinite period of time and the projecting outline of the teeth is aesthetically pleasant.

Obviously, the embodiments here described and illustrated are only non limiting examples of the invention. For example, in the preferred embodiments, the inclination of the implants are of about 5° and 22°, but in the same way may be carried out implants with different inclinations.

The dimension and the shape of groove 4 may be modified according to the requirements in order to preserve the maximum quantity of bone although ensuring the success of the implant.

Further variations and/or additions may be made by those skilled in the art to the embodiments here described and illustrated without departing from the scope of the invention itself.

For the construction of the implant according to the present invention it is possible to use any known material considered suitable for constructing implants of conventional type.

## Claims

1. An endosteal implant system comprising a screw (1), a prostetic pillar (6) and a crown (9,9'), the screw being suitable for insertion in the bone, and being provided in the frontal portion with a baseplate (3) and with a cavity (2), the latter being suitable for allowing the fixing of the prosthetic pillar (6, 6') and for defining an external edge (10) and an internal edge (11) of the baseplate (3), said prosthetic pillar (6, 6') being suitable for receiving crown (9, 9') for applying and shaping the tooth **characterized in that** the lateral surface of said baseplate (3) is provided with a groove (4), said crown (9, 9') being provided with an extension (5), contiguous to its lateral surface and angled with respect thereto, suitable for getting, with its complementary shape, into said groove (4), in such a way that the edges of the crown (9, 9') correspond to the external edges of the baseplate (3), said prosthetic pillar (6, 6') comprising a projecting portion which ends on said internal edge (11) and said crown (9, 9') laying on said external edge (10), in such a way that between said prosthetic pillar and said crown (9, 9') is kept an interspace for restraining exceeding binding material.

2. An endosteal implant according to claim 1, **characterized in that** the prosthetic pillar (6, 6') is fastened to the screw (1) by means of cement.

3. An endosteal implant according to one of the previous claims, **characterized in that** the projecting portion of said prosthetic pillar (6, 6') is provided with a threaded cavity wherein a fastening means (8, 8'), suitable for fixing said crown (9, 9'), is screwable.

4. An endosteal implant according to claim 3, **characterized in that** the projecting portion of the prosthetic pillar (6, 6'), the fastening means (8, 8') and the crown (9, 9') are inclined with respect to the axis of the screw (1).

5. An endosteal implant according to claim 4, **characterized in that** the angle formed by the projecting portion of the prosthetic pillar (6, 6'), by the fastening means (8, 8') and by the crown (9, 9') with the axis of the screw (1) is preferably comprised between 5° and 30°.

6. An endosteal implant according to claim 5, **characterized in that** said angle formed by the projecting portion of the prosthetic pillar (6), by the fastening means (8) and by the crown (9) with the axis of the screw (1) is of 5°.

7. An endosteal implant according to claim 5, **characterized in that** said angle formed by the projecting portion of the prosthetic pillar (6'), by the fastening means (8') and by the crown (9') with the axis of the screw (1) is of 22°.

8. An endosteal implant according to one of the previous claims from 1 to 3, **characterized in that** the prosthetic pillar (6"), the further screw (7"), the fastening means (8") and the crown (9") are coaxial with the screw (1).

9. An endosteal implant according to one of the previous claims, **characterized in that** a binding material is applied on the baseplate (3) before the application of the crown (9, 9', 9").

## Patentansprüche

1. Endosteales Implantatsystem, enthaltend eine Schraube (1), einen prothetischen Zapfen (6) und eine Krone (9, 9'), wobei die Schraube für das Einsetzen in den Knochen geeignet und im Frontbereich mit einer Grundplatte (3) und mit einem Hohlraum (2) versehen ist, der dazu geeignet ist, die Befestigung des prothetischen Zapfens (6, 6') zu ermöglichen und einen äußeren Rand (10) und einen inneren Rand (11) der Grundplatte (3) zu bestimmen, wobei der prothetische Zapfen (6, 6') dazu geeignet ist, eine Krone (9, 9') zum Anbringen und Gestalten des Zahns aufzunehmen, **dadurch gekennzeichnet, dass** die Seitenfläche der Grundplatte (3) mit einer Auskehlung (4) versehen ist, die Krone (9, 9') mit einer Verlängerung (5) versehen ist, die mit ihrer Seitenfläche bündig ist und im Winkel zu dieser verläuft, geeignet, mit ihrer komplementären Gestalt derart in die Auskehlung (4) einzugreifen, dass die Ränder der Krone (9, 9') den äußeren Rändern der Grundplatte (3) entsprechen, wobei der prothetische Zapfen (6, 6') einen vorstehenden Abschnitt aufweist, der an dem inneren Rand (11) endet und die Krone (9, 9') auf dem äußeren Rand (10) so liegt, dass zwischen dem prothetischen Zapfen und der Krone (9, 9') ein Zwischenraum zur Aufnahme überschüssigen Bindematerials verbleibt.

2. Endosteales Implantat nach Anspruch 1, **dadurch gekennzeichnet, dass** der prothetische Zapfen (6, 6') an der Schraube (1) mittels Zement befestigt ist.

3. Endosteales Implantat nach einem der vorhergehenden Ansprüche, **dadurch gekennzeichnet, dass** der vorstehende Abschnitt des prothetischen Zapfens (6, 6') einen mit einem Gewinde versehenden Hohlraum aufweist, in den eine Halteeinrichtung (8, 8') zum Befestigen der Krone (9, 9') einschraubbar ist.

4. Endosteales Implantat nach Anspruch 3, **dadurch gekennzeichnet, dass** der vorstehende Abschnitt des prothetischen Zapfens (6, 6'), die Halteeinrichtung (8, 8') und die Krone (9, 9') gegenüber der Achse der Schraube (1) geneigt sind.

5. Endosteales Implantat nach Anspruch 4, **dadurch gekennzeichnet**" dass der zwischen dem vorstehenden Abschnitt des prothetischen Zapfens (6, 6'), der Halteeinrichtung (8, 8') und der Krone (9, 9') einerseits und der Achse der Schraube (1) andererseits eingeschlossene Winkel vorzugsweise zwischen 5° und 30° liegt.

6. Endosteales Implantat nach Anspruch 5, **dadurch gekennzeichnet, dass** der Winkel, der zwischen dem vorstehenden Abschnitt des prothetischen Zapfens (6), der Halteeinrichtung (8) und der Krone (9) einerseits und der Achse der Schraube (1) andererseits eingeschlossen ist, 5° ist.

7. Endosteales Implantat nach Anspruch 5, **dadurch gekennzeichnet, dass** der Winkel, der zwischen dem vorstehenden Abschnitt des prothetischen Zapfens (6), der Halteeinrichtung (8) und der Krone (9) einerseits und der Achse der Schraube (1) andererseits eingeschlossen ist, 22° ist.

8. Endosteales Implantat nach einem der Ansprüche 1 bis 3, **dadurch gekennzeichnet, dass** der prothetische Zapfen (6"), die weitere Schraube (7"), die Halteeinrichtung (8") und die Krone (9") mit der Schraube (1) koaxial sind.

9. Endosteales Implantat nach einem der vorhergehenden Ansprüche, **dadurch gekennzeichnet, dass** ein Bindematerial an der Grundplatte (3) vor der Anbringung der Krone (9, 9', 9") angebracht ist.

## Revendications

1. Système d'implant endo-osseux comportant une vis (1), un pilier prothétique (6) et une couronne (9, 9'), la vis étant appropriée pour une insertion dans l'os, et étant munie, dans la partie frontale, d'une plaque de base (3) et d'une cavité (2), cette dernière étant appropriée pour permettre la fixation du pilier prothétique (6, 6') et pour définir un bord externe (10) et un bord interne (11) de la plaque de base (3), ledit pilier prothétique (6, 6') étant approprié pour recevoir une couronne (9, 9') pour appliquer et mettre en forme la dent, **caractérisé en ce que** la surface latérale de ladite plaque de base (3) est munie d'une rainure (4), ladite couronne (9, 9') étant munie d'un prolongement (5), contigu à sa surface latérale et incliné par rapport à celle-ci, approprié pour entrer, avec sa forme complémentaire, dans ladite rainure (4), de telle manière que les bords de la couronne (9, 9') correspondent aux bords externes de la plaque de base (3), ledit pilier prothétique (6, 6') comportant une partie faisant saillie qui se termine sur ledit bord interne (11) et ladite couronne (9, 9') se trouvant sur ledit bord externe (10), de telle manière qu'entre ledit pilier prothétique et ladite couronne (9, 9'), un espace intermédiaire est maintenu pour restreindre un matériau de liaison en excès.

2. Implant endo-osseux selon la revendication 1, **caractérisé en ce que** le pilier prothétique (6, 6') est fixé sur la vis (1) par l'intermédiaire de ciment.

3. Implant endo-osseux selon l'une quelconque des revendications précédentes, **caractérisé en ce que** la partie faisant saillie dudit pilier prothétique (6, 6') est munie d'une cavité filetée dans laquelle des moyens de fixation (8, 8'), appropriés pour fixer ladite couronne (9, 9'), peuvent être vissés.

4. Implant endo-osseux selon la revendication 3, **caractérisé en ce que** la partie faisant saillie du pilier prothétique (6, 6'), les moyens de fixation (8, 8') et la couronne (9, 9') sont inclinés par rapport à l'axe de la vis (1).

5. Implant endo-osseux selon la revendication 4, **caractérisé en ce que** l'angle formé par la partie faisant saillie du pilier prothétique (6, 6'), par les moyens de fixation (8, 8') et par la couronne (9, 9'), avec l'axe de la vis (1), est de préférence compris entre 5 ° et 30 °.

6. Implant endo-osseux selon la revendication 5, **caractérisé en ce que** ledit angle formé par la partie faisant saillie du pilier prothétique (6), par les moyens de fixation (8) et par la couronne (9), avec l'axe de la vis (1), est de 5°.

7. Implant endo-osseux selon la revendication 5, **caractérisé en ce que** ledit angle formé par la partie faisant saillie du pilier prothétique (6'), par les moyens de fixation (8') et par la couronne (9'), avec l'axe de la vis (1), est de 22°.

8. Implant endo-osseux selon l'une quelconque des revendications précédentes 1 à 3, **caractérisé en ce que** le pilier prothétique (6"), la vis supplémentaire (7"), les moyens de fixation (8") et la couronne (9") sont coaxiaux avec la vis (1).

9. Implant endo-osseux selon l'une quelconque des revendications précédentes, **caractérisé en ce qu'**un matériau de liaison est appliqué sur la plaque de base (3) avant l'application de la couronne (9, 9', 9").
